# EUROPÄISCHE PATENTSCHRIFT

(11) **EP 2 490 412 B1**
(45) Veröffentlichungstag und Bekanntmachung des Hinweises auf die Patenterteilung: **11.09.2013**
(21) Anmeldenummer: 11155033.1
(22) Anmeldetag: 18.02.2011
(51) Int. Cl.: H04M 1/04

(54) **Verliersichere Clipbefestigung**
Clip fixing to prevent loss
Fixation par clip protégée contre la perte

(43) Veröffentlichungstag der Anmeldung: 22.08.2012
(73) Patentinhaber: Gigaset Communications GmbH, 81379 München (DE)
(72) Erfinder: Trummer, Frank, 46282, Dorsten (DE); Höpken, Reiner, 46485, Wesel (DE); Elting, Ralf, 46499, Hamminkeln (DE)
(74) Vertreter: Michalski Hüttermann & Partner Patentanwälte

(56) Entgegenhaltungen:
- DE-U1- 29 615 321
- US-A- 5 661 798
- US-A- 5 829 102
- US-A1- 2002 009 977
- US-A1- 2006 030 379
- US-A1- 2008 314 941

## Beschreibung

Die vorliegende Erfindung betrifft eine Clipbefestigung für ein elektronisches Gerät, insbesondere eine verliersichere Befestigung eines Haltclips für ein Telekommunikationsendgerät.

Vielfach werden an elektronischen Geräten, wie beispielsweise drahtlosen Telefonen, Haltclips vorgesehen, mit welchem man das Gerät zum Tragen an der Kleidung eines Nutzers befestigen kann. Solche Haltclips ermöglichen es dem Nutzer eines portablen elektronischen Gerätes dieses in einfacher Weise mitzuführen. Unter Berücksichtigung der Vielfältigkeit solcher portablen elektronischen Geräte gibt es im Stand der Technik auch eine Vielzahl unterschiedlicher Ausgestaltungen entsprechender Clipbefestigungen.

So offenbart beispielsweise die Europäische Patentschrift EP 0 583 538 B1 einen Halteclip für ein tragbares elektronisches Gerät, welcher das tragbare elektronische Gerät an drei Seiten umgreift und mittels Rippen in Nuten im Gehäuse des Gerätes eingeschnappt ist.

Die europäische Patentschrift EP 0 298 759 B1 offenbart eine Gehäuse- und Halterungsanordnung für einen tragbaren Kommunikationsapparat mit einem Gehäuse zur Aufnahme des Kommunikationsapparates und einer an dem Gehäuse angeordneten Halterung, wobei die Halterung abnehmbar an dem Gehäuse angeordnet ist, wobei eine Batterieabdeckung vorgesehen ist, die einen Teil des Gehäuses bildet und relativ zum Gehäuse verschiebbar ist, wobei die Halterung, wenn diese an dem Gehäuse angeordnet ist, mit dem Gehäuse an mindestens zwei Stellen in Eingriff steht, so dass an einer der mindestens zwei Stellen die Halterung so-GD 46625 / DS:UAM wohl das Gehäuse, als auch durch die Batterieabdeckung gleichzeitig berührt, und wobei eine Verriegelungseinrichtung vorgesehen ist, die jeweils zu einem der mindestens zwei Stellen gehört, zum Verriegeln der Halterung in Position, wenn die Halterung an dem Gehäuse angeordnet ist, wobei die Batterieabdeckung an dem Gehäuse abnehmbar ist, während die Halterung mit dem Gehäuse in Eingriff gehalten wird, und wobei das Entfernen der Batterieabdeckung das Lösen der Halterung erleichtert.

Ein Nachteil der aus dem Stand der Technik bekannten Clipbefestigungen ist es, dass diese nicht gleichzeitig verliersicher und einfach lösbar an dem elektronischen Gerät befestigbar sind.

Es ist daher die Aufgabe der vorliegenden Erfindung eine verbesserte Clipbefestigung anzugeben.

Gelöst wird diese Aufgabe durch eine Anordnung gemäß Anspruch 1. Ausgestaltungen der erfindungsgemäßen Anordnung finden sich in den Unteransprüchen sowie der nachfolgenden Beschreibung.

Es wird somit eine Anordnung zur Befestigung eines Halteclips an einem elektronischen Gerät, insbesondere einem drahtlosen Telekommunikationsendgerät, angegeben, wobei der Halteclip zur verliersicheren Befestigung an einem Batteriefachdeckel des elektronischen Gerätes zwei parallel angeordnete Schenkel aufweist, welche durch Ausnehmungen in dem Batteriefachdeckel in Rastnasen des Batteriefachdeckels unter Ausbildung eines Drehlagers eingreifen, wobei der Batteriefachdeckel mittels eines Befestigungselementes an einem Gehäuse befestigbar ist, wobei das Gehäuse Schultern aufweist, welche derart in die Ausnehmungen des Batteriefachdeckels eingreifen, das bei bestimmungsgemäßer Befestigung des Batteriefachdeckels am Gehäuse die Schenkel des Halteclip in axialer Richtung der Drehachse des Drehlagers derart durch die Schultern bewegungsbegrenzt sind, dass eine abrutschsichere Verbindung zwischen den Schenkeln und den Rastnasen ausgebildet ist.

Durch die erfindungsgemäße Anordnung ist der Halteclip bei bestimmungsgemäßer Anbringung des Batteriefachdeckels am Gehäuse durch die mechanische Wechselwirkung der Elemente des Gehäuses, des Batteriefachdeckels und des Halteclips verliersicher mit dem Gehäuse verbunden.

In einer bevorzugten Ausgestaltung der erfindungsgemäßen Anordnung weist der Batteriefachdeckel eine Federelementaufnahme zur Aufnahme eines Federelementes auf. Das Federelement ist dabei derart angeordnet, dass es eine Rückstellkraft auf den Halteclip ausübt, mittels welcher dieser an beispielsweise einem Stoffabschnitt eines Kleidungsstückes angeklemmt werden kann, um so das elektronische Gerät an der Kleidung eines Nutzers zu befestigen.

In einer weiteren Ausgestaltung der Erfindung weist der Batteriefachdeckel ein Friktionselement auf. Das Friktionselement wirkt dabei durch Erhöhung des Reibungswiderstandes zwischen Halteclip und Stoffabschnitt verstärkend auf die Haltekraft der Clipanordnung. In einer weiteren Ausgestaltung weist auch der Halteclip ein Friktionselement auf, welches mit dem Friktionselement des Batteriefachdeckels wechselwirken kann und so zu einer weiteren Verstärkung der Haltekraft beiträgt.

In einer bevorzugten Ausgestaltung der Erfindung weist der Halteclip eine Ausnehmung auf. Eine solche Ausnehmung kann insbesondere zur Befestigung eines Sicherungsbandes vorgesehen sein, mit welchem das elektronische Gerät für den Fall des Abrutschens vom Stoffabschnitt der Kleidung des Nutzers vor einem Herunterfallen und einer damit einhergehenden Gefahr der Beschädigung gesichert werden kann.

In einer weiteren Ausgestaltung der Erfindung weist das Gehäuse eine im Wesentlichen mit der Federelementaufnahme des Batteriefachdeckels korrespondierende Ausnehmung auf. Durch das Vorsehen einer solchen Ausnehmung kann die Aufbauhöhe der Anordnung vorteilhaft verringert werden.

In einer weiteren Ausgestaltung der Erfindung ist das Befestigungselement zur Befestigung des Batteriefachdeckels an dem Gehäuse als Rastelement ausgeführt. Hierdurch ist es möglich, eine einfache Öffnung des Batteriefaches vorzusehen, um die in diesem angeordneten Batterien und/oder Akkumulatoren austauschen zu können. Insbesondere kann hierzu das Rastelement derart ausgestaltet sein, dass es sich ohne Zuhilfenahme eines Werkzeugs aus einer verrasteten Stellung in eine offene Stellung lösen lässt.

In einer weiteren bevorzugten Ausgestaltung der Erfindung sind bei bestimmungsgemäßer Befestigung des Batteriefachdeckels am Gehäuse die Rastnasen des Batteriefachdeckels in axialer Richtung der Drehachse des Drehlagers zueinander durch Schultern des Gehäuses bewegungsbegrenzt. Hierdurch wird sichergestellt, dass die Rastnasen des Batteriefachdeckels nicht in Richtung zueinander einer entsprechend einwirkenden Kraft ausweichen können und so die die Rastnasen umgreifenden Schenkel des Halteclips von den Rastnasen abrutschen können.

Die Erfindung wird nachfolgend anhand von Figuren weiter erläutert. Dabei zeigt
Fig. 1 eine Rückansicht eines Telekommunikationsendgerätes mit einer Halteclipanordnung nach der Erfindung;
Fig. 2 eine Rückansicht des Telekommunikationsendgerätes gemäß Fig. 1 bei geöffnetem Batteriefachdeckel;
Fig. 3 eine Detailzeichnung eines Batteriedeckels und eines Halteclips in einer Anordnung nach der Erfindung;
Fig. 4 eine Seitenansicht einer Halteclipanordnung nach der Erfindung; und
Fig. 5 eine Schnittzeichnung in Richtung A-A einer Halteclipanordnung nach der Erfindung.

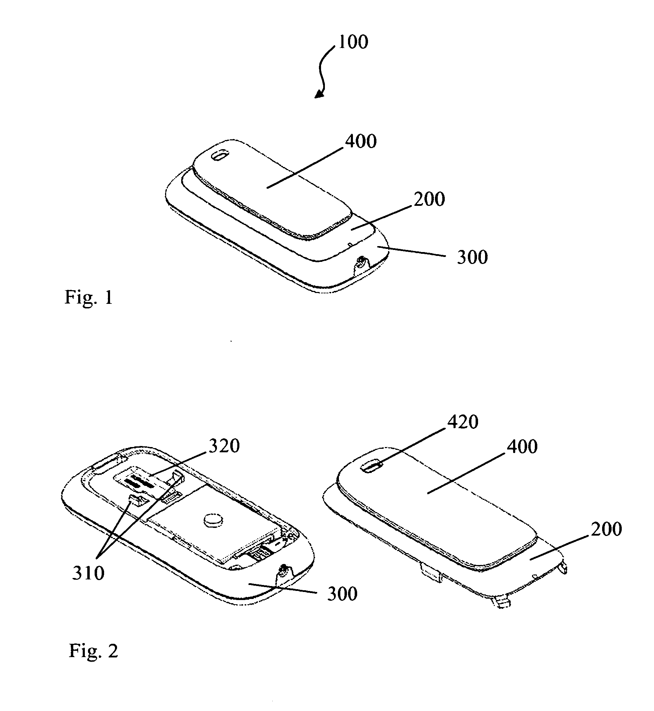

Fig. 1 zeigt eine Rückansicht eines Telekommunikationsendgerätes 100 mit einer Halteclipanordnung nach der Erfindung, bei welcher ein Halteclip 400 an einem Batteriefachdeckel 200 angeordnet ist. Der Batteriefachdeckel 200 wiederum ist an einem Gehäuse 300 befestigt, um einen Bereich zur Aufnahme einer Batterie und/oder eines Akkumulators als Stromquelle zum Betrieb des Telekommunikationsendgerätes 100 abzudecken.

Fig. 2 eine Rückansicht des Telekommunikationsendgerätes 100 gemäß Fig. 1 bei geöffnetem Batteriefachdeckel 200. Der an dem Batteriefachdeckel 200 angeordnete Halteclip 400 weist eine Ausnehmung 420 zur Aufnahme eines Sicherungsbandes auf, mit welchem das Telekommunikationsendgerät 100 für den Fall des Abrutschens von einem Stoffabschnitt der Kleidung des Nutzers an dem es mittels der erfindungsgemäßen Halteclipanordnung befestigt war vor einem Herunterfallen und einer damit einhergehenden Gefahr der Beschädigung gesichert werden kann. In dem im Gehäuse 300 des Telekommunikationsendgerätes 100 vorgesehenen Batteriefach sind Schultern 310 vorgesehen, welche wie in den nachfolgenden Zeichnungen gezeigt in Ausnehmungen 210 im Batteriefachdeckel 200 eingreifen können. Darüber hinaus ist in dem Gehäuse 300 eine Ausnehmung 320 vorgesehen, welche im Wesentlichen mit einer Federelementaufnahme 220 des Batteriefachdeckels korrespondiert. Hierdurch kann in vorteilhafter Weise ein flacherer Aufbau des Telekommunikationsendgerätes 100 erreicht werden.

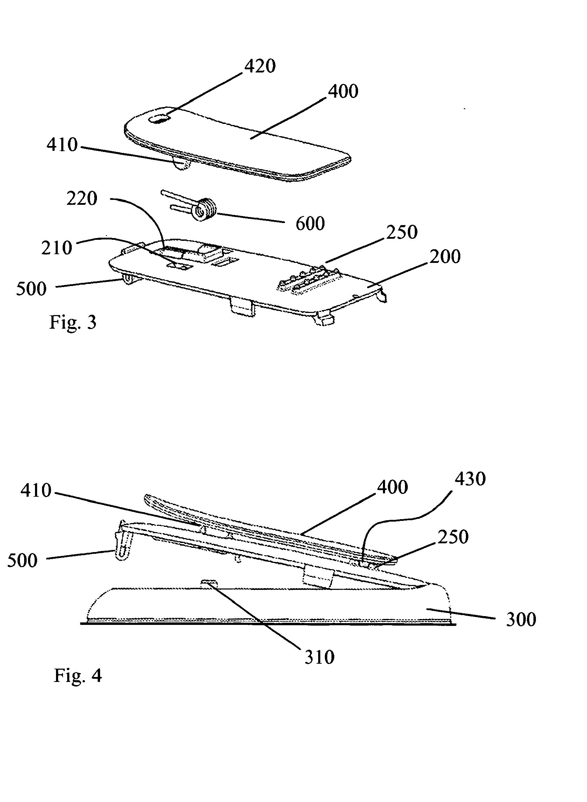

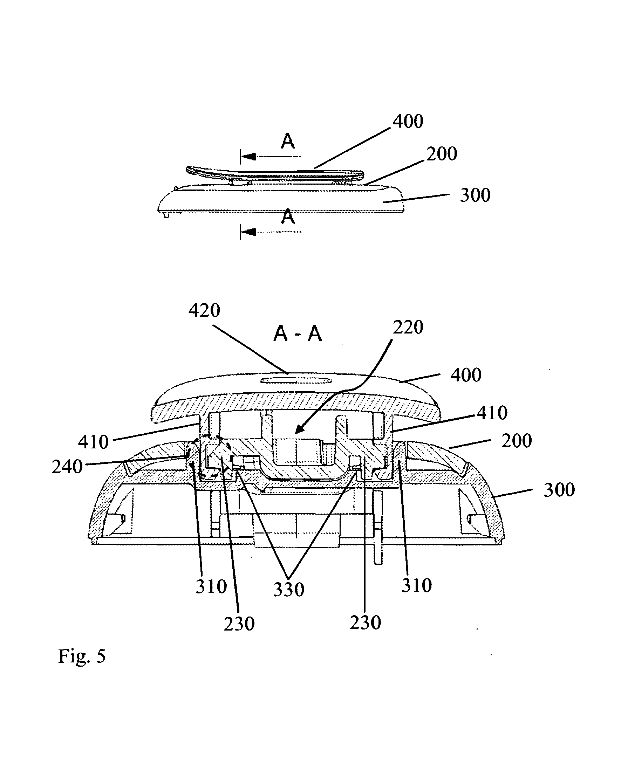

Fig. 3 zeigt eine Detailzeichnung eines Batteriedeckels 200 und eines Halteclips 400 in einer Anordnung nach der Erfindung. Neben der bereits in Fig. 2 erwähnten Ausnehmung 420 weist der Halteclip 400 Schenkel 410 auf, welche wie in Fig. 5 gezeigt in Rastnasen 230 des Batteriefachdeckels 200 einrasten können. Der Batteriefachdeckel 200 weist Ausnehmungen 210 auf, über welche die Rastnasen 230 für die Schenkel 410 des Halteclips zugänglich sind. Darüber hinaus weist der Batteriefachdeckel 200 eine Federelementaufnahme 220 zur Auf nahme eines Federelementes 600 auf. Zur Befestigung des Batteriefachdeckels 200 an dem Gehäuse 300 ist ein Rastelement 500 vorgesehen, welches in der gezeigten Ausgestaltung der Erfindung einstückig mit dem Batteriefachdeckel 200 des Telekommunikationsendgerätes 100 ausgebildet ist. Zur Verbesserung der durch den Halteclip 400 ausgeübten Haltekraft weist der Batteriefachdeckel Friktionselemente 250 auf.

Fig. 4 zeigt eine Seitenansicht einer Anordnung eines Halteclips 400 gemäß der Erfindung, bei welchem der Batteriefachdeckel 200 teilgeöffnet ist. Die in die in Fig. 3 erkennbaren Ausnehmungen 210 des Batteriefachdeckels 200 eingreifenden Schultern 310 des Gehäuses 300, durch welche die Schenkel 410 des Halteclips 400 bei bestimmungsgemäßer Anordnung des Batteriefachdeckels 200 am Gehäuse 300 vor einem Abrutschen von den in Fig. 5 zu erkennenden Rastnasen 230 gesichert werden, sind in dieser Ansicht gut sichtbar. Der Halteclip 400 weist in der gezeigten Ausführung ein Friktionselement 430 auf, welches mit dem Friktionselementen 250 des Batteriefachdeckels in der Weise interagiert, das eine verstärkte Haftwirkung des Halteclips 400 an einem Stoffabschnitt eines Kleidungsstückes eines Nutzers des Telekommunikationsendgerätes erreicht wird.

Fig. 5 zeigt eine Schnittzeichnung in Richtung A-A einer Halteclipanordnung nach der Erfindung. Der Halteclip 400 weist zur verliersicheren Befestigung an einem Batteriefachdeckel 200 des Telekommunikationsendgerätes 100 zwei parallel angeordnete Schenkel 410 auf, welche durch Ausnehmungen 210 in dem Batteriefachdeckel 200 in Rastnasen 230 des Batteriefachdeckels 200 unter Ausbildung eines Drehlagers 240 eingreifen. Das Gehäuse 300 weist Schultern 310 auf, welche derart in die Ausnehmungen 210 des Batteriefachdeckels 200 eingreifen, das bei bestimmungsgemäßer Befestigung des Batteriefachdeckels 200 am Gehäuse 300 die Schenkel 410 des Halteclip 400 in axialer Richtung der Drehachse des Drehlagers 240 derart durch die Schultern 310 bewegungsbegrenzt sind, dass eine abrutschsichere Verbindung zwischen den Schenkeln 410) und den Rastnasen 230 ausgebildet wird. Die Rastnasen 230 des Batteriefachdeckels 200 sind wiederum in axialer Richtung der Drehachse des Drehlagers 240 zueinander durch Schultern 330 des Gehäuses 300 bewegungsbegrenzt.

### Bezugszeichenliste:

- 100: Elektronisches Gerät
- 200: Batteriefachdeckel
- 210: Ausnehmung
- 220: Federelementaufnahme
- 230: Rastnase
- 240: Drehlager
- 250: Batteriedeckelseitiges Friktionselement
- 300: Gehäuse
- 310: Schulter
- 320: Ausnehmung
- 330: Schulter
- 400: Halteclip
- 410: Schenkel
- 420: Ausnehmung
- 430: Halteclipseitiges Friktionselement
- 500: Befestigungselement
- 600: Federelement

## Patentansprüche

1. Anordnung zur Befestigung eines Halteclips (400) an einem elektronischen Gerät (100), insbesondere einem drahtlosen Telekommunikationsendgerät, **dadurch gekennzeichnet, dass** der Halteclip (400) zur verliersicheren Befestigung an einem Batteriefachdeckel (200) des elektronischen Gerätes (100) zwei parallel angeordnete Schenkel (410) aufweist, welche durch Ausnehmungen (210) in dem Batteriefachdeckel (200) in Rastnasen (230) des Batteriefachdeckels (200) unter Ausbildung eines Drehlagers (240) eingreifen, wobei der Battericfachdeckel (200) mittels eines Befestigungselementes (500) an einem Gehäuse (300) befestigbar ist, wobei das Gehäuse (300) Schultern (310) aufweist, welche derart in die Ausnehmungen (210) des Batteriefachdeckels (200) eingreifen, das bei bestimmungsgemäßer Befestigung des Batteriefachdeckels (200) am Gehäuse (300) die Schenkel (410) des Halteclip (400) in axialer Richtung der Drehachse des Drehlagers (240) derart durch die Schultern (310) bewegungsbegrenzt sind, dass eine abrutschsichere Verbindung zwischen den Schenkeln (410) und den Rastnasen (230) ausgebildet ist.

2. Anordnung gemäß Anspruch 1, wobei der Batteriefachdeckel (200) eine Federelementaufnahme (220) zur Aufnahme eines Federelementes (600) aufweist.

3. Anordnung gemäß einem der vorhergehenden Ansprüche, wobei der Batteriefachdeckel (200) ein Friktionselement (250) aufweist.

4. Anordnung gemäß Anspruch 3, wobei der Halteclip (400) ein Friktionselement (430) aufweist, welches derart angeordnet ist, dass es mit dem Friktionselement (250) des Batteriefachdeckels (200) interagieren kann.

5. Anordnung gemäß einem der vorhergehenden Ansprüche, wobei der Halteclip (400) eine Ausnehmung (420) aufweist.

6. Anordnung gemäß einem der vorhergehenden Ansprüche, wobei das Gehäuse (300) eine derart mit der Federelementaufnahme (220) korrespondierende Ausnehmung (320) aufweist, dass die Aufbauhöhe der Anordnung verringert werden kann.

7. Anordnung gemäß einem der vorhergehenden Ansprüche, wobei das Befestigungselement (500) durch ein Rastelement gebildet ist.

8. Anordnung gemäß einem der vorhergehenden Ansprüche, wobei bei bestimmungsgemäßer Befestigung des Batteriefachdeckels (200) am Gehäuse (300) die Rastnasen (230) des Batteriefachdeckels (200) in axialer Richtung der Drehachse des Drehlagers (240) zueinander durch Schultern (330) des Gehäuse (300) bewegungsbegrenzt sind.

9. Portables elektronisches Gerät, insbesondere Telekommunikationsendgerät, aufweisend eine Anordnung zur Befestigung eines Halteclips (400) gemäß einem der Ansprüche 1 bis 8.

## Claims

1. Arrangement for fastening a holding clip (400) to an electronic device (100), in particular a wireless telecommunications terminal, **characterized in that** the holding clip (400), in order to be securely fastened to a battery compartment cover (200) of the electronic device (100), has two parallel limbs (410) which engage, through recesses (210) in the battery compartment cover (200), in latching lugs (230) of the battery compartment cover (200) so as to form a rotary bearing (240), wherein the battery compartment cover (200) can be fastened to a housing (300) by means of a fastening element (500), wherein the housing (300) has shoulders (310) which engage in the recesses (210) in the battery compartment cover (200) in such a way that, when the battery compartment cover (200) is fastened to the housing (300) in the intended manner, the movement of the limbs (410) of the holding clip (400) is limited by the shoulders (310) in the axial direction of the rotation axis of the rotary bearing (240) in such a way that a slip-resistant connection is formed between the limbs (410) and the latching lugs (230).

2. Arrangement according to Claim 1, wherein the battery compartment cover (200) has a spring element receptacle (220) for accommodating a spring element (600).

3. Arrangement according to one of the preceding claims, wherein the battery compartment cover (200) has a friction element (250).

4. Arrangement according to Claim 3, wherein the holding clip (400) has a friction element (430) which is arranged in such a way that it can interact with the friction element (250) of the battery compartment cover (200).

5. Arrangement according to one of the preceding claims, wherein the holding clip (400) has a recess (420).

6. Arrangement according to one of the preceding claims, wherein the housing (300) has a recess (320) which corresponds to the spring element receptacle (220) in such a way that the physical height of the arrangement can be reduced.

7. Arrangement according to one of the preceding claims, wherein the fastening element (500) is formed by a latching element.

8. Arrangement according to one of the preceding claims, wherein, when the battery compartment cover (200) is fastened to the housing (300) in the intended manner, the movement of the latching lugs (230) of the battery compartment cover (200) is limited by shoulders (330) of the housing (300) in the axial direction of the rotation axis of the rotary bearing (240) in relation to one another.

9. Portable electronic device, in particular telecommunications terminal, having an arrangement for fastening a holding clip (400) according to one of Claims 1 to 8.

## Revendications

1. Dispositif pour la fixation d'un clip de maintien (400) à un appareil électronique (100), en particulier à un terminal de télécommunication sans fil, **caractérisé en ce que** le clip de maintien (400) présente, pour la fixation imperdable à un couvercle de compartiment de batterie (200) de l'appareil électronique (100), deux branches disposées parallèlement (410), qui s'engagent à travers des évidements (210) dans le couvercle de compartiment de batterie (200) dans des ergots d'encliquetage (230) du couvercle de compartiment de batterie (200) en formant un appui rotatif (240), dans lequel le couvercle de compartiment de batterie (200) peut être fixé à un boîtier (300) au moyen d'un élément de fixation (500), dans lequel le boîtier (300) présente des épaulements (310) qui s'engagent dans les évidements (210) du couvercle de compartiment de batterie (200) d'une manière telle que, lorsque le couvercle de compartiment de batterie (200) est fixé correctement sur le boîtier (300), les branches (410) du clip de maintien (400) soient limitées en déplacement en direction axiale de l'axe de rotation de l'appui rotatif (240) par les épaulement (310), de façon à réaliser une liaison sans glissement entre les branches (410) et les ergots d'encliquetage (230).

2. Dispositif selon la revendication 1, dans lequel le couvercle de compartiment de batterie (200) présente un logement d'élément de ressort (220) destiné à contenir un élément de ressort (600).

3. Dispositif selon l'une quelconque des revendications précédentes, dans lequel le couvercle de compartiment de batterie (200) présente un élément de friction (250).

4. Dispositif selon la revendication 3, dans lequel le clip de maintien (400) présente un élément de friction (430), qui est disposé d'une manière telle qu'il puisse interagir avec l'élément de friction (250) du couvercle de compartiment de batterie (200).

5. Dispositif selon l'une quelconque des revendications précédentes, dans lequel le clip de maintien (400) présente un creux (420).

6. Dispositif selon l'une quelconque des revendications précédentes, dans lequel le boîtier (300) présente un creux (320) correspondant au logement d'élément de ressort (220), de telle manière que la hauteur hors tout du dispositif puisse être réduite.

7. Dispositif selon l'une quelconque des revendications précédentes, dans lequel l'élément de fixation (500) est formé par un élément d'encliquetage.

8. Dispositif selon l'une quelconque des revendications précédentes, dans lequel, lorsque le couvercle de compartiment de batterie (200) est fixé correctement sur le boîtier (300), les ergots d'encliquetage (230) du couvercle de compartiment de batterie (200) sont limités en déplacement en direction axiale de l'axe de rotation de l'appui rotatif (240) l'un vers l'autre par des épaulements (330) du boîtier (300).

9. Appareil électronique portable, en particulier terminal de télécommunication, présentant un dispositif pour la fixation d'un clip de maintien (400) selon l'une quelconque des revendications 1 à 8.
